Europäisches Patentamt

European Patent Office

Office européen des brevets

(19)

(11) **EP 1 304 813 A1**

(12) **EUROPEAN PATENT APPLICATION**
published in accordance with Art. 158(3) EPC

(43) Date of publication:
 **23.04.2003 Bulletin 2003/17**

(51) Int Cl.⁷: **H04B 1/69**

(21) Application number: **00940122.5**

(22) Date of filing: **04.07.2000**

(86) International application number:
 **PCT/CN00/00190**

(87) International publication number:
 **WO 02/007338 (24.01.2002 Gazette 2002/04)**

(84) Designated Contracting States:
 **AT BE CH CY DE DK ES FI FR GB GR IE IT LI LU MC NL PT SE**
 Designated Extension States:
 **AL LT LV MK RO SI**

(71) Applicant: **LinkAir Communications, Inc.
 San Jose, California 95134 (US)**

(72) Inventor: **LI, Daoben
 Beijing 100044 (CN)**

(74) Representative: **Nicholls, Michael John et al
 J.A. KEMP & CO.,
 14, South Square,
 Gray's Inn
 London WC1R 5JJ (GB)**

(54) **METHOD OF CONVERTING SPREAD SPECTRUM MULTIPLE ADDRESS CODE IN A CODE DIVISION MULTIPLE ACCESS SYSTEM**

(57)   This invention introduce openly a cell/sector address code conversion method used in Code Division Multi-address (CDMA) system which uses LA code to make uneven time arrangement for the spectrum expansion multi-address codes. It applied the rearrangement of LA code non-zero element intervals, LA code orthogonal rotating conversion and scrambling conversion, and combined with orthogonal rotating conversion, skipping code conversion, scrambling conversion of basic multi-address codes, to reduce the interference between adjacent cell/sector subscribers to far lower than the low level of current system.

The input data of the k-th (k=1,2,…,K) user: $b_0, b_1 .. b_{L-1}$

Multiplex

$d_0 = [d_{00}, d_{01} …, d_{0r-1}]$

$d_1 = [d_{10}, d_{11} …, d_{1r-1}]$

$d_{L-2} = [d_{20}, d_{21} …, d_{2r-1}]$

$d_{L-1} = [d_{L-10}, d_{L-11} …, d_{L-1\,r-1}]$

Spread & Modulate

## Figure 4

EP 1 304 813 A1

**Description**

Technical Scope

This invention involves an address code conversion method of cell or sector (marked as cell/sector here after) in Code Division Multi-address (CDMA) cellular mobile system. It is used for Code Division Multi-address system networking and can greatly decrease interference between adjacent cell/sectors.

Invention Background

As the era of information society and personal communication is coming, people have become more urgent in requiring radio communication technology. These requirements are: 1) higher spectrum efficiency, very large communication capacity; 2) high speed and variable speed data transmission; 3) higher service quality, lower error rate; 4) lower capture rate; 5) more reliable security and safety, etc.

Up to now, Code Division Multi-address (CDMA) is the best technology to answer the above requirements. In this application, code division multi-address system refers to the systems applying code division multi-address and spectrum expansion technologies, which include the combination of code division multi-address, time division multi-address or frequency division multi-address and so on. In code division multi-address system, system capacity or service quality mainly depends on signal/interference ratio. Therefore, whether you can put the interference level in system under control or reduce it or not, it is the key for success of Code Division Multi-address (CDMA) system. Generally the interference referred to here consists of four proportions: The first is local and intersystem noise level. The only way to reduce it is to use low noise amplifier, which can only reduce noise level a little. The second is inter-code or intersymbol interference (ISI). The third is multi-access interference (MAI). The fourth is adjacent inter-cell/ channels interferences (ACI).ISI and MAI can be reduced and removed by selecting a good performance multiple address code in cell/sector. ACI must be reduced and removed by address inter-code conversion technology between cell/sectors.

Same as any other multi-address systems, in Code Division Multi-address (CDMA) system the signals of different address transmitted by mobile channel retains in orthogonal. Otherwise there will be mutual interference. In Time Division Multi-address (TDMA) system, not overlapping time slot ensures the orthogonal in cell/sector. In Frequency Division Multi-address (FDMA) system, not overlapping Frequency Slot in cell/sector ensures the orthogonal. For not adjacent cells, whether Time Division Multi-address or Frequency Division Multi-address are ensured by their orthogonal carrier frequencies. For Code Division Multi-address system, all these orthogonal performances are ensured by the inter-code orthogonal of selected addresses.

In other PCT international patent applications of the inventor Li Daoben (PCT/CN98/00151, titled: A Coding Technology for Spectrum Expansion Multi-address Code; PCT/CN00/00028, titled: A Spectrum Expansion Multi-address Coding Method with Zero Correlation Window; PCT/CN00/00092, titled: A Orthogonal Conversion Method of Spectrum Expansion Multi-address Code), Li described the Inter-symbol interference (ISI), multi-address interference (MAI), and introduced many methods to reduce these interferences into zero. Especially in PCT/CN98/00151, an international patent application titled A Coding Technology for Spectrum Expansion Multi-access Code, Li disclosed a coding method for Spectrum expansion multi-address code. The spectrum expansion code has good self and inter-correlation. For simplicity, this spectrum expansion code will be referred as LA code in the description of this invention.

This invention coves mainly adjacent cell interference (ACI). As communication capacity is increasing, cell/sector clothing area will become less and less, ACI problem will be more outstanding. Because under common condition, a subscriber station (base station) receives signals from its cell/sector base station (subscriber station) and also receive signals from adjacent cell/ sector base station (subscriber station). The signals form adjacent cell/sector base stations are propagated with bigger time delay that is difficult to control. Under some special conditions, they may even be times of the address code length. They generate large adjacent cell interference (ACI). Therefore, how to control and reduce adjacent cell interference (ACI) is a key problem faced by Code Division Multi-address (CDMA) system..

Now, the most popular method used for decreasing adjacent cell interference (ACI) is to use different offset segment of a long Pseudo Noise sequence (Long PN Sequence) to scramble orthogonal spectrum expansion multi-address code. With the exception that scrambling can remain orthogonal between basic orthogonal spectrum expansion multi-address codes as without relative time delay, but cannot remain basic spectrum expansion multi-address codes and self-correlation and inter-correlation (including period, non-period and inter correlations) between them. Besides, scrambling is prohibited to multi-address code with "zero relative window" features, (See PCT/CN00/00028). Therefore, scrambling has limitation. And it has limited effect to reducing Adjacent Cell Interference (ACI). The shorter the code length is, the worse the effect is. This is limited theoretically by Welch limit.

In fact, scrambling is not the only way to reduce adjacent cell interference. There is another way that is orthogonal rotating conversion method (See PCT/CN00/00092).

In PCT/CN00/00092, a rotating generation method is introduced. It can let not-zero real number and complex number sequence of any length to generate a orthogonal spectrum expansion multi-address code set after proper rotating.

In PCT/CN00/00092, also introduced a orthogonal rotating conversion method of spectrum expansion multi-address code set. It can let any real number and complex number orthogonal code set undergone conversion to generate original code sets. The resulted orthogonal code sets remain the same feature with the original code set. And code sets before and after conversion are orthogonal to each other.

No matter scrambling or orthogonal conversion transact mode, they all process the spectrum expansion code separately. So this processing method has its limitations. A better effect may be brought out if a coding mode is used to lay a restriction in between spectrum expansion multi-address codes beforehand and the restriction is very long, and then to perform the conversion process. Because based on the radical principle of coding or information processing, the longer the "restriction", the better the process effect.

Content of This Invention

The objective of this invention is to provide a spectrum expansion multi-address code conversion method applying to code division multi-address system.

The objective of this invention is also to provide a cellular radio communication system networking method using code division multiple access and spectrum expansion technology.

The objective of this invention is to provide a method to reduce interference between adjacent cells/sectors, It can make the interference level between adjacent cell/sectors much less than current system.

An adjacent cell/sector spectrum expansion multi-address code conversion method of this invention is used in Code Division Multi-address system. This method is applying to code division multi-access system networking, can reduce the interference between adjacent cells/sectors. This method assigns different one or more LA codes to different adjacent cells/sectors. Based on the rule of assigned LA codes, it rearranges basic spectrum expansion multi-address codes unevenly on time axis and makes them the new complex orthogonal code used for spectrum expansion modulation.

The LA code assigned to each cell/sector can be parallel orthogonal LA code set. Based on the rule of allocated orthogonal LA codes, the basic spectrum expansion multi-address codes are rearranged unevenly on time axis and become the new complex orthogonal code set used for spectrum expansion modulation and for data transmission.

Each cell/sector can be assigned a LA code for data transmission.

To minimize the interference between adjacent cells or sectors, three rules should be considered when assigning LA codes, which can be used separately or in combined mode.

1) Assign different Non-zero element interval arrangement to different cell/sector LA codes.
2) Assign different orthogonal rotating conversion, equivalent conversion and scrambling conversion etc. or their complex to different cell/sector LA codes.
3) Assign different orthogonal rotating conversion, skipping code conversion, equivalent conversion, scrambling conversion etc. or their complex to different cell/sector basic multi-address codes $C_k$ $(k=1, 2, ..., K)$.

The core of this invention is: Restrict the spectrum expansion multi-address code in Code Division Multi-address system according to the structure of LA code. Apply the better inter-correlation character of LA code and increase restriction length to reduce interference between subscribers in adjacent cells/sectors greatly.

Because LA code is a new Address code with better self-correlation and inter-correlation characters and having both spectrum expansion gains and time expansion gains (See PCT/CN98/00151). Especially the rearrangement of non-zero element intervals in LA code set does not affect their self-correlation and inter-correlation characters. This character can be used as cell/sector assignment. Besides, if the non-zero element interval arrangement is selected properly, the inter-correlation characters between LA code sets with different arrangements are nice, the inter-correlation side peak is small and sparse, the absolute value of maximum side peak is only 2/L. Here L represents the number of non-zero elements in LA code set. This character can ensure that the interference level in adjacent cell/sector subscribers be depressed. Combined with other technologies for reducing adjacent cell/sector interference, such as orthogonal rotating conversion method of spectrum expansion multi-address code (See PCT/CN00/00092), skipping code and scrambling methods, etc. The interference level can be expected to be reduced greatly.

Brief Description of the Figures

To make the objective, scheme and advantages of this invention clearer, using the attached figures a detail description of the preference implement mode is given in the following.

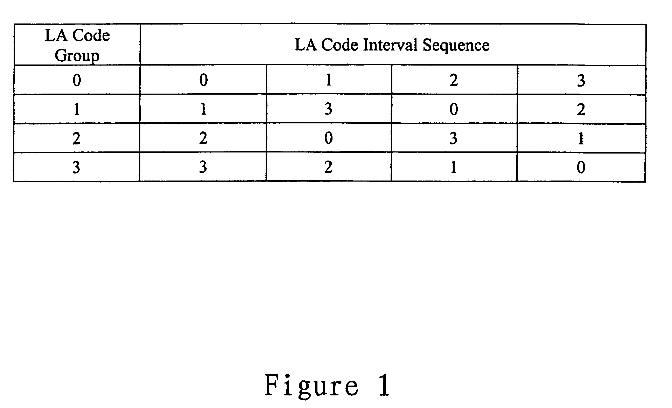

The table in figure 1 illustrates the interval arrangement in LA codes as L=4.

The table in figure 1 illustrates the interval arrangement in LA codes as L=16.

Figure 3 is a better implement example that illustrates forming of LA and $C_k$ complex orthogonal code set. Where the polarity of LA pulse is arranged as orthogonal code. $C_k$ $(k=1, 2, ..., K)$ is the spectrum expansion multi-access code, $\overline{C_k}$ is the reverse code of $C_k$ (re-

verse polarity). The shadow parts in the figure are spaces (without notations).

Figure 4 illustrates the serial and parallel conversion of the better implement examples of this invention. Where, L is the number of LA pulses, $r = \log_2 S$. S is the level of modulation waveform (BPSK S=2,QPSK S=4, etc.).

Figure 5 is a structure figure of the parallel transmission transmit end for the better implement examples of this invention.

Figure 6 is a serial transmission LA and $C_k$ complex code forming sketch map for the better implement examples of this invention.

Figure 7 is a serial transmission transmit end structure map for the better implement examples of this invention.

The Mode for Implementing this Invention

As selecting the LA code assigned to each adjacent cell/sector, it may be considered to meet the following conditions: the minimized non-zero element interval of LA code is larger or equal to the length of basic spectrum expansion multi-address code $C_k$ (k=1, 2, ..., K). The number of non-zero element of LA code L is sufficient, $20 \log \frac{2}{L}$ is larger or equal to the required adjacent cell interference suppression grade.

To minimize the interference between adjacent cells/sectors, the following three principles may be take into consideration as assigning LA code. They can be used separately or in combination.

　　1) Assign different non-zero element interval arrangement to different cells/sectors of LA code.
　　2) Assign different orthogonal rotating conversion, equivalent conversion, scrambling conversion, etc or their complex to different cells/sectors of LA code.
　　3) Assign different orthogonal rotating conversion, skipping code conversion, equivalent conversion, scrambling conversion, etc. or their complex to different cells/sectors basic Multi-address code $C_k$ (k=1, 2, ..., K).

The better way is that the LA codes assigned to every adjacent cell/sector take the following generation mode: To make orthogonal rotating conversion, equivalent conversion, scrambling conversion, non-zero element interval arrangement sequence conversion, or their complex on the base of one LA code or one orthogonal LA code set to generate more LA codes or more orthogonal LA code sets, and from which select a LA code (one or more) to be assigned to every adjacent cell/sector. The rule for non-zero element interval arrangement sequence conversion is:

　　If there is inter-shift between LA code sequences in different interval arrangements, the same interval encounter cannot occur two or more times.

The better way is to make orthogonal rotating, skipping code, scrambling conversion, or their complex for basic spectrum expansion multi-address code and assign different conversion codes of multi-address codes to different cell/sector subscribers.

The better way is to assign different non-zero element interval arrangements to different LA codes of adjacent cell/sector. When there is shift between LA code sequences in different interval arrangements, the same interval encounter cannot occur two or more times. Assign different orthogonal rotating conversion, equivalent conversion, scrambling conversion, or their complex to different adjacent cell/sector LA codes. And assign different orthogonal rotating conversion, skipping code conversion, equivalent conversion, scrambling conversion, or their complex to basic spectrum expansion multi-address codes of different adjacent cells/sectors. By doing so to reduce the interference between adjacent cells/sectors as great as possible.

As a better implement example of this invention, the LA code assigned to each cell/sector can be parallel orthogonal LA code set. The basic spectrum expansion multi-address code are rearranged unevenly on time axis in the rule of assigned orthogonal LA code sets and become the new complex orthogonal code sets used for spectrum expansion modulation and for data transmission in parallel.

The better way is that the same cell/sector is assigned the same non-zero element interval arrangement of the orthogonal LA code set in order to reduce the complexity of implement.

The better way is that the new complex orthogonal code set used for spectrum expansion modulation in the same cell/sector can be used for transmitting data to subscriber in parallel and first perform data flow serial-parallel conversion before transmitting data.

The steps of better implement examples are listed in following in detail. It is a multi-address code conversion method and also in fact a code division multi-address system networking method and a method to reduce interference between adjacent cells/sectors.

　　1) For a code division multi-address system, for subscriber $k$ (k=1, 2, ..., K; K is total subscriber number), consider the last digit of its spectrum expansion code $C_k$ as the non-zero element location of LA code, and be arranged according to the arrangement rule of LA code non-zero element. So after matching filter relative operating for $C_k$, the result output is the LA code required.
　　2) Using the length of the spectrum expansion multi-address code $C_k$ to determine the parameter $N_0$ in LA code. $N_0$ is the smallest non-zero element interval. $N_0$ should be larger or equal to the length of $C_k$.
　　3) To determine parameter $L$ (the number of non-zero element) in LA code based on system requirements for interference suppression between adjacent cell subscribers. Now $L$ is the number of spectrum expansion multi-address code $C_k$ restricted by LA code. The resulted $L$ must assure $20log2/L$ be larger or equal to interference suppression (dB) required. For example, when $L$=18, the interference suppression is 18 dB. $L$ generally is an even number or the powers of 2, such as 4, 8, 16, 32...etc.

4) To arrange the non-zero elements in LA code according to an orthogonal matrix, such as Hardmard matrix, Walsh matrix, etc. to form orthogonal LA codes of $L$. If the non-zero element is "+", $C_k$ is positive code, if "-", $C_k$ is negative code.

5) Perform orthogonal rotating conversion of orthogonal LA code set produced in step 4) (See PCT/CN00/00092) or equivalent conversion to form $M$ new orthogonal code sets. Here, $M$ is the total executable conversion number. Or perform scrambling conversion for the orthogonal LA code set produced in step 4) based on a shift segment of a long PN sequence to form $M$ new orthogonal code sets. Here, $M$ is the number of shift segments available.

After orthogonal rotating conversion, equivalent conversion, scrambling conversion, etc. (including their complex conversions), LA code sets can be assigned to different cells/sectors.

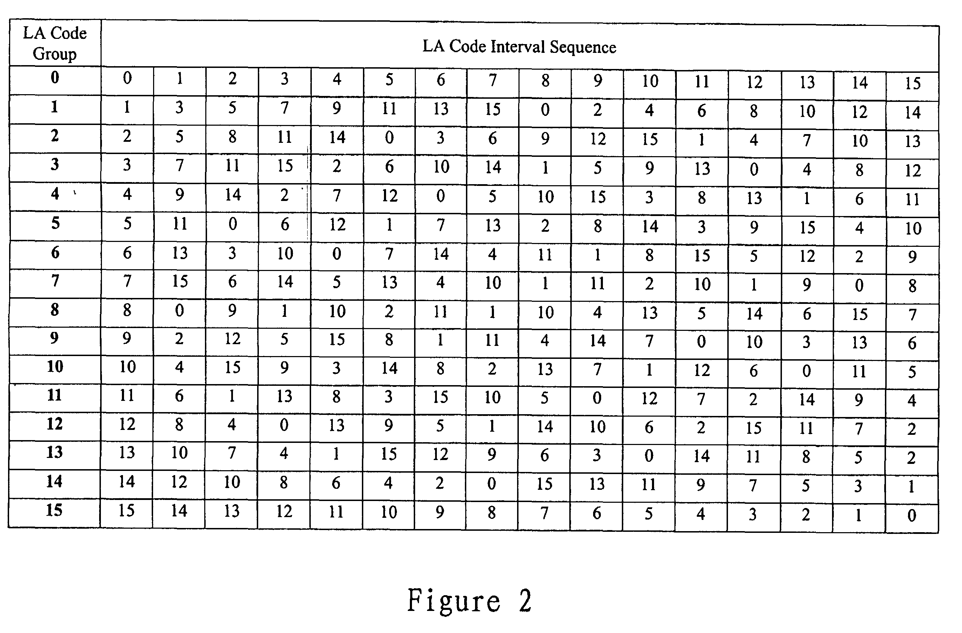

6) To rearrange the non-zero element interval in LA code sets to form new LA orthogonal code set. Generally speaking, the LA codes with $L$ non-zero elements have $L$ non-zero element intervals. So the interval arrangement numbers should be $L$ ! . Nevertheless not all the interval arrangements are useful. The rule for selecting useful interval arrangements is: when inter-shifting there should at most only one interval be encountered. The tables in figure 1 and figure 2 gave the examples of interval arrangement as $L$=4. The digital in the figures indicates a special non-zero element interval. From the tables it can be seen that when lines (row) shifting to each other, no more than one same digital (that is interval) will encountered. To assign a non-zero element arrangement to cells/sectors.

7) Perform skipping code conversion, orthogonal rotating conversion (See PCT/CN00/00092), equivalent conversion, scrambling conversion etc. (including their complex conversions) for spectrum expansion multi-address codes of subscriber $k$. To assign different conversions to different cells/sectors.

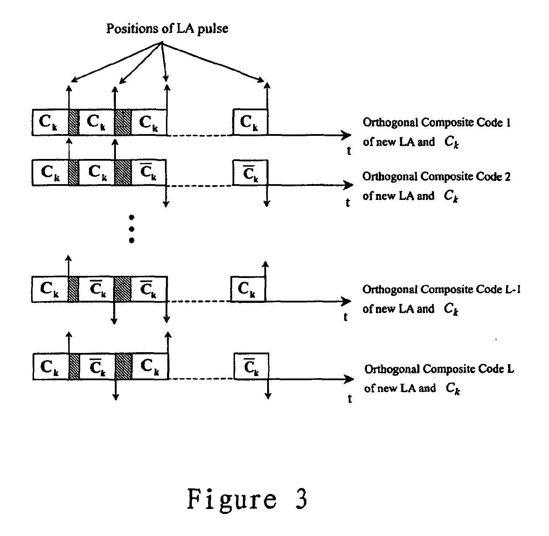

8) See figure 3. Use the spectrum expansion multi-address code $C_k$ produced in step 7) to fill LA orthogonal code set formed in step 6). So, in one cell/sector the subscriber $k$ ($k$=1, 2, ..., K) has $L$ orthogonal LA address codes available for complex spectrum expansion with $C_k$.

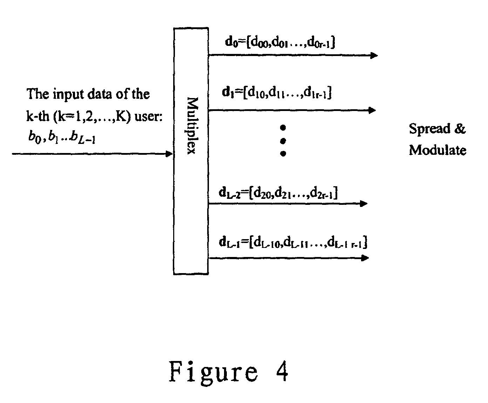

9) See figure 4. In a cell/sector to perform serial-parallel conversion for the input data flow of subscriber $k$ ($k$=1, 2, ..., K) to form $L$ parallel data flow.

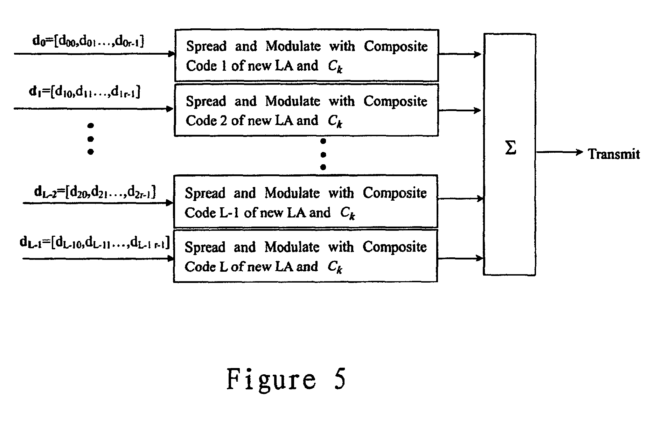

10) See figure 5. Perform spectrum expansion, time expansion, and modulation for the parallel data flow of subscriber $k$ ($k$=1, 2, ..., K) produced in step 9) separately using L orthogonal La and $C_k$ ($k$=1, 2, ..., K) complex spectrum expansion time code.

11) See figure 5. Add the spectrum expansion, time expansion and modulated waveform created in step 10) to form the spectrum expansion and time expansion modulation waveform of $k$ ($k$=1, 2, ..., K) subscriber data in a cell/sector finally.

This is the basic procedure for data flow spectrum expansion, time expansion and modulation of subscribers of $k$ ($k$=1, 2, ..., K) addresses at sending end in a cell/sector. Because $L$ $C_k$ code is included in LA code, parallel transmission must be taken to ensure message rate unchanged. At receive end, demodulation and de-expansion are completely contrary to each other. No more repetition here.

As another better implement example of this invention, every cell/sector assigned a LA code used for serial transmitting data.

The better way is to make data flow forward error correction coding. Where the bit restriction length of code output bit stream is exactly the length of a LA code.

The better way is to split the bit stream of multi-level, multi-phase modulation according to the multiple relations between notations and bits in multi-level and multi-phase modulation and use a coder to restrict them to reduce implement complexity. The sum of restriction length is the length of a LA code.

Different from the parallel LA code process, the serial LA code process does not change the subscriber data flow transmission mode into parallel transmission mode. Nevertheless, same as the parallel LA code process, it also uses the different arrangements of LA code non-zero element interval to reduce the subscriber interference between cells/sectors between cells/sectors. But the character of LA code must be represented by special forward error correction code. The steps are the following:

1) For a code division multi-address system, if it is the subscriber $k$ ($k$=1, 2, ..., K; K is the total subscriber number), take the larst digital of spectrum expansion code $C_k$ as the location of LA code non-zero element and arrange them according to the arrangement rule of a LA code non-zero element. So after matching filter relative operating for $C_k$, the result output is the LA code required.

2) Based on the length of spectrum expansion multi-address code $C_k$ to determine the parameters $N_0$ in LA code, $N_0$ is the smallest non-zero element interval, $N_0$ should be larger or equal to the length of $C_k$.

3) According to requirements of system for interference Suppression grade between adjacent cell subscribers to determine parameter $L$ (non-zero element) number in LA code. Now, $L$ is the number of spectrum expansion multi-access code $C_k$ restricted by LA code. The $L$ determined should ensure *20log2/L* larger than needed interference suppression grade (dB). For example, as $L$=18, the interference suppression grade provided is 18dB. Generally, $L$ is a even number or powers of 2, such as 4; 8, 16, 32...,etc.

4) To rearrange the non-zero element intervals in selected LA codes (its non-zero element constant is positive) to form new LA code. The selection rule for interval arrangement is the same as that in step 6) of parallel LA code process. Different cell/sector is assigned LA code with different interval arrangement.

5) For LA code formed in step 4), perform orthogonal rotating conversion, equivalent conversion, scrambling conversion or their conversion to form $M$ new LA codes. Where $M$ is the sum that can be converted. Different cell/sector is assigned with different transformable LA code.

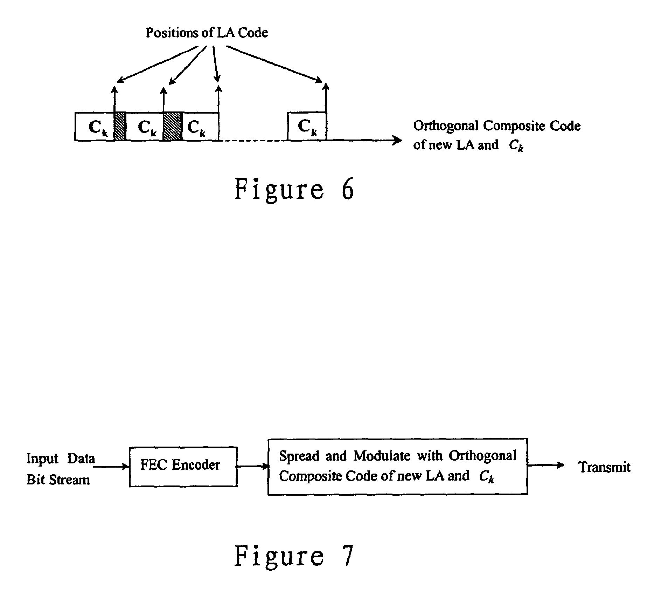

6) See figure 6, for LA and $C_k$ code in $C_k$ complex code to perform orthogonal rotating conversion, skipping code conversion, equivalent conversion or scrambling conversion (including they and combination conversion among them). Different cell/sector is assigned with different transformable $C_k$ code.

7) See figure 7, perform forward correction for input data flow of subscriber $k$ $(k=1, 2, ..., K)$. There is no restriction on forward error correction methods. It can be packet code, volume code, Trellis code, Turbo code, etc. Its code rate and restriction length must let the bit restriction length in coding output bit stream is exactly the length of a LA code.

For example, for selected LA code, $L$=16, the modulation mode is QPSK, the restriction length of coding output bit stream should be $2\times16$=32. So that when code rate is 1/4, coding restriction length must be 8. When code rate is 1/2, coding restriction length is 16. As code rate is 3/4, the coding restriction length must be 24.

To decrease coding restriction length and codec complexity, the bit pair in QPSK modulation can be separated with each other and then restrict them respectively. By doing this, as restriction length of the coding output bit stream reduced to half the coding restriction length is also reduced half. This method can be popularized to other multiple level modulation modes.

This is the essential procedure for data flow forward error correction coding, spectrum expansion and modulation of subscribers of $k(k=1, 2, ..., K)$ addresses at sending end in a cell. Here, each notation after error correction coding is spectrum expanded by $C_k$. $L$ notations are transferred in LA code. At receive end, the procedure of demodulation, de-expansion is opposite completely. Give details is unnecessary here.

Compare to the classical cell/sector assignment technology that only scrambling transform multi-address code, this invention can perform more conversions to multi-address codes simultaneously, which not only expanded options but also increase the suppression grade to interference between different cell/sector subscribers. The excellent inter-correlation feature makes the most important contribution here. The longer is the LA code, the higher is the suppression grade to interference between adjacent cell/sector subscribers.

Besides, while transmitting parallel, LA code is used to perform subscriber data flow synchronous operating while spectrum expanding and time expanding. During serial transmitting, forward error correction (FEC) together with LA code also indirectly performs simultaneous operation for subscriber data flow. This make the system not only have the capability to countermine against frequency selective attenuation resulted from channel time expansion (multi-paths effects), but also have the capability to countermine against time selective attenuation resulted by channel frequency dispersion (Doppler effect). Therefore the system capability against attenuation (namely the transmission reliability) has been improved greatly.

**Claims**

1. A spectrum expansion Multi-address code conversion method between adjacent cells/sectors in Code Division Multi-address system. It features in:

   Assign different LA codes to different adjacent cells/sectors, and
   Based on the rule of allocating LA codes, it rearranges basic spectrum expansion multi-address codes unevenly on time axis and makes them the new complex orthogonal code used for spectrum expansion modulation.

2. As the method described in right claim 1, the feature is:

   Assign different Non-zero element interval arrangement to different adjacent cell/sector LA codes. And If there is inter-shift between LA code sequences in different interval arrangements, the same interval encounter cannot occur two or more times.

3. As the methods described in right claim 1 or 2, the feature is:

   Assign different orthogonal rotating conversion, equivalent conversion, scrambling conversion, or their complex to different adjacent cell/sector LA codes.

4. As the method described in right claim 1, the feature is:

Assign different orthogonal rotating conversion, skipping code conversion, equivalent conversion, scrambling conversion or their complex to different cell/sector basic multi-address codes.

5. As the method described in right claim 1, the feature is:

Assign different Non-zero element interval arrangement to different adjacent cell/sector LA codes. And If there is inter-shift between LA code sequences in different interval arrangements, the same interval encounter cannot occur two or more times.
Assign different orthogonal rotating conversion, equivalent conversion, scrambling conversion, or their complex to different adjacent cell/sector LA codes. And
Assign different orthogonal rotating conversion, skipping code conversion, equivalent conversion, scrambling conversion or their complex to different cell/sector basic multi-address codes.

6. As the method described in right claim 1, the feature is the related LA code satisfies the following requirement:

The minimized non-zero element interval of the mentioned LA code is larger or equal to the length of basic spectrum expansion address code.

7. As the method described in right claim 1, the feature is the related LA code satisfies the following requirement:

The related number of non-zero element of LA code L is sufficient, $20\log\frac{2}{L}$ is larger or equal to the required adjacent cell interference suppression grade.

8. As the method described in right claim 1, the feature is that the generation mode of the LA codes assigned to each adjacent cell/sector is:

To make orthogonal rotating conversion, equivalent conversion, scrambling conversion, non-zero element interval arrangement sequence conversion, or their complex on the base of one LA code or one orthogonal LA code set to generate more LA codes or more orthogonal LA code sets, and from which select a LA code (one or more) to be assigned to every adjacent cell/sector.
The rule for non-zero element interval arrangement sequence conversion is that if there is inter-shift between LA code sequences in different interval arrangements, the same interval encounter cannot occur two or more times.

9. As the method described in right claim 1, the feature is:

The LA code assigned to each cell/sector can be parallel orthogonal LA code set. Based on the rule of allocated orthogonal LA code sets, the basic spectrum expansion multi-address codes are rearranged unevenly on time axis and become the new complex orthogonal code set used for transmitting data in parallel.

10. As the method described in right claim 9, the feature is:

The related orthogonal LA code sets in the same cell/sector have same non-zero element interval arrangements.

11. As the method described in right claim 9, the feature is:

The related new complex orthogonal code set used for spectrum expansion modulation in the same cell/sector can be used for transmitting data to subscriber in parallel and first perform data flow serial-parallel conversion before transmitting data.

12. As the method described in right claim 1, the feature is:

Each cell/sector is assigned a LA code for transmitting data in serial.

13. As the methods described in right claims 1 or 12, the feature is:

Make data flow forward error correction coding. Where the bit restriction length of code output bit stream is exactly the length of a LA code.

14. As the methods described in right claim, the feature is:

The bit stream of multi-level, multi-phase modulation can be split according to the multiple relations between notations and bits in multi-level and multi-phase modulation and use a coder to restrict them. The sum of restriction length is the length of a LA code.

| LA Code Group | LA Code Interval Sequence | | | |
|---|---|---|---|---|
| 0 | 0 | 1 | 2 | 3 |
| 1 | 1 | 3 | 0 | 2 |
| 2 | 2 | 0 | 3 | 1 |
| 3 | 3 | 2 | 1 | 0 |

# Figure 1

| LA Code Group | LA Code Interval Sequence | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| 0 | 0 | 1 | 2 | 3 | 4 | 5 | 6 | 7 | 8 | 9 | 10 | 11 | 12 | 13 | 14 | 15 |
| 1 | 1 | 3 | 5 | 7 | 9 | 11 | 13 | 15 | 0 | 2 | 4 | 6 | 8 | 10 | 12 | 14 |
| 2 | 2 | 5 | 8 | 11 | 14 | 0 | 3 | 6 | 9 | 12 | 15 | 1 | 4 | 7 | 10 | 13 |
| 3 | 3 | 7 | 11 | 15 | 2 | 6 | 10 | 14 | 1 | 5 | 9 | 13 | 0 | 4 | 8 | 12 |
| 4 | 4 | 9 | 14 | 2 | 7 | 12 | 0 | 5 | 10 | 15 | 3 | 8 | 13 | 1 | 6 | 11 |
| 5 | 5 | 11 | 0 | 6 | 12 | 1 | 7 | 13 | 2 | 8 | 14 | 3 | 9 | 15 | 4 | 10 |
| 6 | 6 | 13 | 3 | 10 | 0 | 7 | 14 | 4 | 11 | 1 | 8 | 15 | 5 | 12 | 2 | 9 |
| 7 | 7 | 15 | 6 | 14 | 5 | 13 | 4 | 10 | 1 | 11 | 2 | 10 | 1 | 9 | 0 | 8 |
| 8 | 8 | 0 | 9 | 1 | 10 | 2 | 11 | 1 | 10 | 4 | 13 | 5 | 14 | 6 | 15 | 7 |
| 9 | 9 | 2 | 12 | 5 | 15 | 8 | 1 | 11 | 4 | 14 | 7 | 0 | 10 | 3 | 13 | 6 |
| 10 | 10 | 4 | 15 | 9 | 3 | 14 | 8 | 2 | 13 | 7 | 1 | 12 | 6 | 0 | 11 | 5 |
| 11 | 11 | 6 | 1 | 13 | 8 | 3 | 15 | 10 | 5 | 0 | 12 | 7 | 2 | 14 | 9 | 4 |
| 12 | 12 | 8 | 4 | 0 | 13 | 9 | 5 | 1 | 14 | 10 | 6 | 2 | 15 | 11 | 7 | 2 |
| 13 | 13 | 10 | 7 | 4 | 1 | 15 | 12 | 9 | 6 | 3 | 0 | 14 | 11 | 8 | 5 | 2 |
| 14 | 14 | 12 | 10 | 8 | 6 | 4 | 2 | 0 | 15 | 13 | 11 | 9 | 7 | 5 | 3 | 1 |
| 15 | 15 | 14 | 13 | 12 | 11 | 10 | 9 | 8 | 7 | 6 | 5 | 4 | 3 | 2 | 1 | 0 |

Figure 2

Figure 3

The input data of the
k-th (k=1,2,...,K) user:
$b_0, b_1 .. b_{L-1}$

Multiplex

$\mathbf{d_0} = [d_{00}, d_{01} ..., d_{0r-1}]$

$\mathbf{d_1} = [d_{10}, d_{11} ..., d_{1r-1}]$

$\mathbf{d_{L-2}} = [d_{20}, d_{21} ..., d_{2r-1}]$

$\mathbf{d_{L-1}} = [d_{L-10}, d_{L-11} ..., d_{L-1 r-1}]$

Spread &
Modulate

# Figure 4

$d_0 = [d_{00}, d_{01}..., d_{0r-1}]$

| Spread and Modulate with Composite Code 1 of new LA and $C_k$ |

$d_1 = [d_{10}, d_{11}..., d_{1r-1}]$

| Spread and Modulate with Composite Code 2 of new LA and $C_k$ |

$d_{L-2} = [d_{20}, d_{21}..., d_{2r-1}]$

| Spread and Modulate with Composite Code L-1 of new LA and $C_k$ |

$d_{L-1} = [d_{L-10}, d_{L-11}..., d_{L-1 r-1}]$

| Spread and Modulate with Composite Code L of new LA and $C_k$ |

$\Sigma$ → Transmit

# Figure 5

Positions of LA Code

Orthogonal Composite Code
of new LA and $C_k$

# Figure 6

Input Data
Bit Stream → FEC Encoder → Spread and Modulate with Orthogonal Composite Code of new LA and $C_k$ → Transmit

# Figure 7

**EP 1 304 813 A1**

## INTERNATIONAL SEARCH REPORT

International application No.

PCT/CN00/00190

### A. CLASSIFICATION OF SUBJECT MATTER

$IPC^7$ H04B 1/69

According to International Patent Classification (IPC) or to both national classification and IPC

### B. FIELDS SEARCHED

Minimum documentation searched (classification system followed by classification symbols)

$IPC^7$ H04B 1/69

Documentation searched other than minimum documentation to the extent that such documents are included in the fields searched

Electronic data base consulted during the international search (name of data base and, where practicable, search terms used)

EPODOC   WPI   PAJ   CPOPAT

### C. DOCUMENTS CONSIDERED TO BE RELEVANT

| Category* | Citation of document, with indication, where appropriate, of the relevant passages | Relevant to claim No. |
|---|---|---|
| A | US 5914943A(Higuchi et al.) 22.Jun.1999(22.06.99)   See the whole document | 1-14 |
| A | CN 1196842A(ERICSSON GE MOBILE INC.) 21.Oct.1998(21.10.98)   See the whole document | 1-14 |
| A | WO 94/29970A1(NOKIA TELECOMMUNICATIONS) 22.Dec.1994 (22.12.94) See the whole document | 1-14 |

☐ Further documents are listed in the continuation of Box C.   ☒ See patent family annex.

| | | |
|---|---|---|
| * · Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| 19.Dec.2000(19.12.00) | 18 JAN 2001   (18.01.01) |

| Name and mailing address of the ISA/CN | Authorized officer |
|---|---|
| 6 Xitucheng Rd., Jimen Bridge, Haidian District, 100088 Beijing, China | Liu Hong |
| Facsimile No. 86-10-62019451 | Telephone No. 86-10-62093193 |

Form PCT/ISA /210 (second sheet) (July 1998)

14

## INTERNATIONAL SEARCH REPORT
Information patent family members

Search request No.

PCT/CN00/00190

| Patent document cited in search report | Publication Date | Patent family Member(s) | Publication Date |
|---|---|---|---|
| US 5914943A | 22.Jun.1999 | WO 9620544A1 | 04.Jul.1996 |
| | | CA 2184184A | 04.Jul.1996 |
| | | EP 0749223A1 | 18.Dec.1996 |
| | | CN 1144585A | 05.Mar.1997 |
| | | JP 2855171B2 | 10.Feb.1999 |
| CN 1196842A | 21.Oct.1998 | CA 2227880A | 13.Feb.1997 |
| | | WO 9705708A1 | 13.Feb.1997 |
| | | AU 6494896A | 26.Feb.1997 |
| | | US 5615209A | 25.Mar.1997 |
| | | EP 0840960A1 | 13.May.1998 |
| WO 94/29970A1 | 22.Dec.1994 | FI 94819C | 25.Oct.1995 |
| | | AU 6846894A | 03.Jan.1995 |
| | | NO 950499A | 07.Apr.1995 |
| | | EP 0667995A1 | 23.Aug.1995 |
| | | CN 1110887A | 25.Oct.1995 |
| | | JP 8500230T | 09.Jan.1996 |

Form PCT/ISA /210 (extra sheet6) (July 1998)